(19) Europäisches Patentamt / European Patent Office / Office européen des brevets

(11) **EP 2 264 553 B1**

(12) **FASCICULE DE BREVET EUROPEEN**

(45) Date de publication et mention de la délivrance du brevet:
**26.10.2016 Bulletin 2016/43**

(51) Int Cl.:
***G04B 17/22*** *(2006.01)*     ***F16F 1/04*** *(2006.01)*

(21) Numéro de dépôt: **10165641.1**

(22) Date de dépôt: **11.06.2010**

(54) **Ressort thermocompensé et son procédé de fabrication**

Thermokompensierte Feder und ihr Herstellungsverfahren

Thermocompensated spring and manufacturing method thereof

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **31.08.2009 CH 13432009**
           **19.06.2009 EP 09163283**

(43) Date de publication de la demande:
**22.12.2010 Bulletin 2010/51**

(73) Titulaire: **Nivarox-FAR S.A.**
**2400 Le Locle (CH)**

(72) Inventeurs:
• **Charbon, Christian**
**2054, Chézard-St-Martin (CH)**
• **Verardo, Marco**
**2336, Les Bois (CH)**
• **Quintina, José**
**2400, Le Locle (CH)**

(74) Mandataire: **Couillard, Yann Luc Raymond et al**
**ICB**
**Ingénieurs Conseils en Brevets SA**
**Faubourg de l'Hôpital 3**
**2001 Neuchâtel (CH)**

(56) Documents cités:
**EP-A- 1 039 352     EP-A- 1 422 436**
**WO-A-2009/068091    CH-A- 327 796**
**US-A- 1 977 458**

## Description

Domaine de l'invention

L'invention se rapporte à un ressort pour balancier - spiral et plus particulièrement un tel ressort dont le coefficient thermoélastique est sensiblement nul et quasiment insensible aux champs magnétiques. 1 e coefficient thermoélastique (CTE) d'un corps représente la variation relative du module d'Young dudit corps en fonction de la température.

Arrière plan de l'invention

Il est connu, pour un mouvement mécanique d'horlogerie, de rechercher une écart de marche le plus faible possible. Cependant, il est très difficile d'y arriver en raison notamment de la sensibilité de l'ensemble balancier - spiral aux variations de température et de champs magnétiques.

Le document EP 1 039 352 divulgue un ressort-spiral en alliage particulier dont la surface externe comporte un revêtement d'oxyde. Le document divulgue un ressort-spiral qui est thermocompensé c'est-à-dire que, notamment, son coefficient thermoélastique, également appelé coefficient thermique du module d'Young, reste sensiblement proche de zéro et dont la sensibilité aux champs magnétiques est très faible. Cependant, le ressort est très difficile à mettre en oeuvre ce qui occasionne un taux de rebut et un prix de revient qui sont très élevés.

Le document US 1,977,458 propose de former un spiral à partir d'un corps en acier contre lequel est aggloméré par traitement thermique couche de cuivre en formant à leur interface au moins un intermétallique des deux métaux.

Le document WO 2009/06891 propose de former un spiral à partir d'une plaque en monocristal de sillicium coupé selon l'axe <1,1,1>. Le spiral est entièrement recouvert d'une couche d'oxyde permettant de minimiser les coefficients thermiques de la constante de rappel du spiral.

Résumé de l'invention

Le but de la présente invention est de pallier tout ou partie les inconvénients cités précédemment en proposant un ressort thermocompensé pour balancier - spiral dont la mise en oeuvre est simplifiée.

A cet effet, l'invention se rapporte à un ressort thermocompensé pour balancier - spiral comportant une section comprenant un premier matériau métallique caractérisé en ce qu'au moins une des faces de la section comporte une couche externe comportant un deuxième matériau métallique amagnétique dont le coefficient thermoélastique varie dans le sens opposé à celui du premier.

Avantageusement selon l'invention, le ressort est très simple et peut donc utiliser des matériaux classiques ce qui évite des étapes de fabrication complexes.

Conformément à d'autres caractéristiques avantageuses de l'invention :

- au moins deux faces parallèles ou au moins deux faces adjacentes ou toutes les faces de la section comportent ladite couche externe ;
- ladite couche externe court sur tout ou partie de la longueur du ressort ;
- au moins un des matériaux métalliques est paramagnétique ;
- le deuxième matériau est un acier inoxydable ;
- le premier matériau est un alliage FeMn ou un alliage FeNi36 du type invar ;
- la section comporte plusieurs couches externes différentes.

L'invention se rapporte également à une pièce d'horlogerie comportant au moins un ressort conforme à l'une des variantes précédentes.

Enfin, l'invention se rapporte à un procédé de fabrication d'un ressort pour une pièce d'horlogerie comportant les étapes suivantes :

a) former un corps à l'aide d'un premier et d'un deuxième matériaux métalliques solidarisés, les premier et deuxième matériaux ayant des coefficients thermoélastiques qui varient en sens opposé ;
b) diminuer la section du corps ;
c) enrouler le corps afin de former ledit ressort.

On comprend donc que le ressort peut être obtenu avec des matériaux de manière très simple à l'aide d'étapes mécaniques maîtrisées qui autorisent un très faible taux de rebut.

Conformément à d'autres caractéristiques avantageuses de l'invention :

- le procédé comporte, entre l'étape b) et c), l'étape d) : modifier la section dudit corps en une section polygonale ;
- le procédé comporte, après l'étape c), l'étape e) : surélever la spire externe dudit ressort afin de former un ressort du type Breguet ;
- le procédé comporte l'étape f) : effectuer un enlèvement de matière du corps après la formation du ressort afin d'en ajuster le coefficient thermoélastique ;
- le procédé comporte l'étape finale g) : effectuer un traitement thermique après la formation du ressort afin d'ajuster le coefficient thermoélastique et la forme du ressort ;
- selon un premier mode de réalisation, l'étape a) comporte les phases h) : former une barre en un premier matériau métallique, i) : former un tube en un deuxième matériau métallique, j) : enfiler la barre dans le tube, k) : solidariser la barre dans le tube ;
- le procédé comporte, pendant l'étape j), une étape de refroidissement de la barre et/ou de chauffage du tube afin d'augmenter les espaces entre ces derniers dans le but de faciliter ladite étape j) ;
- à titre alternatif, l'étape a) comporte les phases de former une pièce en un premier matériau métallique, de solidariser un deuxième matériau métallique sur la pièce par surmoulage, placage, déformation à froid et/ou à chaud, collage et/ou soudage ;
- l'étape b) est réalisée par déformation à froid et/ou à chaud.
- la section externe du corps à la fin de l'étape a) est comprise entre 5 et 100 mm et, à la fin de l'étape c), comprise entre 10 $\mu$m et 1 mm ;
- au moins un des matériaux est paramagnétique.

Une alternative consiste à proposer un procédé de fabrication d'un ressort pour balancier-spiral comportant les étapes suivantes :

a')former un corps en forme de ressort à l'aide d'un premier matériau métallique ;

b')solidariser un deuxième matériau métallique sur le corps par surmoulage et/ou placage, les premier et deuxième matériaux ayant des coefficients thermoélastiques qui varient en sens opposé.

On comprend donc que la forme du ressort peut être obtenue avec un premier matériau avec une très bonne précision puis, à l'aide d'étape(s) de surmoulage et/ou de placage maîtrisées d'un deuxième matériau, obtenir un ressort thermocompensé de très grande qualité tout en autorisant un très faible taux de rebut.

Conformément à d'autres caractéristiques avantageuses de l'alternative :

l'étape a') est réalisée par un processus du type tréfilage - laminage - estrapadage - traitement thermique de fixage ou par gravage du type ionique réactif profond dans une plaque dudit premier matériau métallique ou par un processus d'électroformage du type LIGA ;

l'étape b') est réalisée par coulée, par galvanoplastie ou par dépôt physique ou chimique en phase vapeur ;

- le procédé comporte l'étape f) : effectuer un enlèvement de matière du corps après la formation du ressort afin d'en ajuster le coefficient thermoélastique ;
- le procédé comporte l'étape finale g) : effectuer un traitement thermique après la formation du ressort afin d'ajuster le coefficient thermoélastique et la forme du ressort ;
- au moins un des matériaux est paramagnétique.

## Description sommaire des dessins

D'autres particularités et avantages ressortiront clairement de la description qui en est faite ci-après, à titre indicatif et nullement limitatif, en référence à l'unique figure représentant un schéma fonctionnel d'un procédé de fabrication d'un ressort selon l'invention.

## Description détaillée des modes de réalisation préférés

L'invention se rapporte à un ressort thermocompensé pour un organe régulateur de pièce d'horlogerie du type balancier - spiral. Le ressort selon l'invention utilise des matériaux susceptibles d'être travaillés par des méthodes classiques de mises en forme de métaux. De plus, les matériaux utilisés sont usuels et donc bon marché.

Selon l'invention, le coefficient thermoélastique du ressort est rendu sensiblement nul, c'est-à-dire une variation relative du module d'Young en fonction de la température sensiblement nulle. Pour parvenir à ce but, on utilise deux matériaux métalliques en recouvrement dont les coefficients thermoélastiques respectifs varient en sens opposé afin de se compenser. On comprend donc que si un des matériaux possède un coefficient thermoélastique positif, le deuxième en possédera un négatif.

De manière parfaitement équivalente, le matériau à coefficient thermoélastique positif peut recouvrir l'autre ou inversement. Seule l'épaisseur en recouvrement est à adapter en fonction de celle recouverte et, également, en fonction du type de balancier afin de globalement compenser l'organe régulateur balancier - spiral.

Le recouvrement des matériaux peut être partiel ou total. Ainsi, notamment, au moins deux faces parallèles ou adjacentes de la section du corps du premier matériau peuvent être munies du deuxième matériau. De manière similaire, le recouvrement peut être sur tout ou partie de la longueur du corps du premier matériau. On comprend également que chaque face peut également comprendre un matériau qui lui est propre, c'est-à-dire ne pas comprendre un unique deuxième matériau. Enfin, au moins un des matériaux peut être paramagnétique afin de rendre sensiblement nul l'influence du ressort aux champs magnétiques.

Préférentiellement, le ressort utilise le couple de matériaux acier inoxydable - alliage FeMn ou acier inoxydable - alliage FeNi36 du type invar. Le matériau qui recouvre l'autre n'a pas forcément d'importance. Cependant, si l'un des deux matériaux est ferromagnétique, l'âme utilise, de manière préférée, ledit matériau ferromagnétique. Aussi, pour les exemples ci-dessus, l'âme utilise préférentiellement l'alliage FeMn (antiferromagnétique) ou FeNi36 (ferromagnétique) et, la couche externe, l'acier (antiferromagnétique). On notera également que cette configuration permet également de limiter l'oxydation dudit ressort.

Afin de calculer les épaisseurs respectives de l'âme (matériau 1) par rapport à la couche externe (matériau 2), on calcule le coefficient thermoélastique corrigé *CTE'* souhaité et éventuellement, le couple corrigé *C'* souhaité pour son adaptation avec un balancier selon les relations suivantes où les coefficients de dilatation sont jugés équivalents :

$$CTE' = \frac{A \cdot E_1 \cdot CTE_1 + B \cdot E_2 \cdot CTE_2}{A \cdot E_1 + B \cdot E_2} \tag{1}$$

$$C' = \frac{(A \cdot E_1 + B \cdot E_2) \cdot (h + 2d) \cdot (e + 2d)^3}{12L} \tag{2}$$

Où :

$$A = \frac{h \cdot e^3}{(e + 2d)^3 \cdot (h + 2d)} \tag{3}$$

$$B = \frac{h \cdot \left[(e+2d)^3 - e^3\right] + 2d \cdot (e+2d)^3}{(e+2d)^3 \cdot (h+2d)} \tag{4}$$

Et :

- $E_x$ est le module d'Young du matériau *x* ;
- $CTE_x$ est le coefficient thermoélastique du matériau *x ;*
- *e* est l'épaisseur de l'âme ;
- *h* est la hauteur de l'âme ;
- *d* est l'épaisseur de la couche externe.

Bien entendu, l'invention ne saurait se limiter au couple acier inoxydable - alliage FeMn ou acier inoxydable - alliage FeNi36. Ainsi, il peut être envisagé d'autres couples. A titre d'exemple, la couche externe peut comporter de l'acier inoxydable et/ou du chrome et/ou du nickel et/ou du fer. De même, à titre d'exemple, l'âme du ressort peut comporter du niobium, de l'alliage NbZr, de l'alliage CrMn, de l'alliage FeMn, de l'alliage FeNi36 ou de l'alliage AuPd.

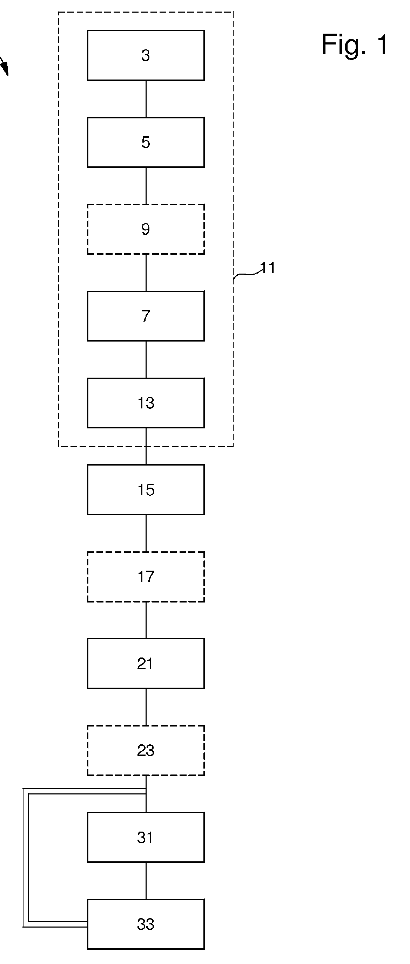

Le procédé de fabrication 1 du ressort ci-dessus va maintenant être expliqué en référence à la figure 1. Le procédé 1 comporte préférentiellement trois étapes principales respectivement de formation 11 d'un corps à l'aide d'un premier et d'un deuxième matériaux métalliques solidarisés, de diminution 15 de la section du corps et d'enroulement 21 dudit corps afin de former ledit ressort.

L'étape de formation 11 comporte généralement les phases 3, 5, 7 et 13 qui sont utilisées pour plusieurs modes de réalisation. Selon un premier mode de réalisation, le corps est formé à partir d'une barre et d'un tube. Dans la première phase 3 du procédé 1, la barre d'un premier matériau est formée. Dans une deuxième phase 5 du procédé 1 qui peut être effectuée en parallèle, avant ou après la phase 3, le tube d'un deuxième matériau est formé. Puis dans une troisième phase 7, la barre est enfilée dans le tube. Préférentiellement, la différence de section entre l'extérieure de la barre et le creux du tube est la plus petite possible afin de limiter leurs déplacements relatifs.

Ainsi afin de faciliter l'exécution de la phase 7, de manière préférée, une phase optionnelle 9, avant la phase 7, est prévue. La phase 9 consiste à effectuer un traitement thermique de la barre et/ou du tube afin de garantir un espace c'est-à-dire une différence de section entre ces derniers la plus grande possible. On comprend donc qu'un chauffage pour dilater le tube et/ou un refroidissement pour contracter la barre sont notamment envisagés. Après la phase 7, l'étape 11 poursuit avec la quatrième phase 13 destinée à solidariser la barre dans le tube. On comprend donc que ce premier mode de réalisation implique le recouvrement sur toute la section de l'âme du premier matériau.

Il est également envisagé de recouvrir seulement certaines faces, ainsi, dans un autre mode de réalisation, les phases 3 et 5 sont toujours faites pour former un premier et un deuxième matériaux. Dans une troisième et une quatrième phases 7, 13, les deux matériaux sont respectivement amenés l'un contre l'autre puis solidarisés. De manière non limitative, dans cet autre mode de réalisation, la phase 13 peut comprendre une déformation à froid et/ou à chaud mais également un collage et/ou un soudage.

Bien entendu, d'autres étapes de formation 11 comportant plus ou moins de phases 3, 5, 7, 9, 13 sont également possibles. Ainsi, selon une alternative, la phase 3 est utilisée pour former un corps en un premier matériau puis, dans une seconde phase 5, il est opéré un surmoulage ou un placage d'un deuxième matériau. On comprend donc que les phases 5, 7 et 13 peuvent être réalisées en même temps, par exemple, par coulée, par galvanoplastie ou encore par dépôt physique ou chimique en phase vapeur.

La deuxième étape 15 est destinée à diminuer la section jusqu'à la section voulue dudit ressort. A titre d'exemple, la section la plus grande du corps peut ainsi passer de 5 à 100 mm à la fin de l'étape 11 à une dimension finale comprise entre 10 $\mu$m et 1 mm.

Il est également parfaitement envisageable que les étapes 11, 15 et 21 soient effectuées dans un ordre différent. En effet, il est possible également de former dans un premier temps uniquement le premier matériau selon les étapes 11, 15 et 21 puis former le deuxième matériau, comme dans l'alternative ci-dessus, lors d'une phase 5 dans laquelle il est opéré un surmoulage et/ou un placage du premier matériau par un deuxième matériau.

A titre d'exemple, la forme du ressort serait donnée au premier matériau qui peut ainsi être obtenu par processus du type tréfilage - laminage - estrapadage - traitement thermique de fixage ou par gravage du type ionique réactif profond dans une plaque du premier matériau ou par un processus d'électroformage du type LIGA (croissance galvanique dans un moule en résine photosensible). Le premier matériau peut ensuite être revêtu, comme dans l'alternative ci-dessus, par coulée, par galvanoplastie ou encore par dépôt physique ou chimique en phase vapeur.

De manière préférée pour le premier mode de réalisation de l'invention, la phase 13 et l'étape 15 sont réalisées en un processus unique de déformation plastique. Ainsi, la déformation occasionnée permet avantageusement de solidariser la barre et le tube mais également de diminuer la section à celle du futur ressort. De manière préférée, le processus de déformation est du type à froid et/ou à chaud avec, éventuellement, des phases intermédiaires de recuit afin d'autoriser la matière à se déformer jusqu'à de très petites dimensions.

Ainsi pour tous les modes de réalisation, l'étape 15 peut comporter des déformations à froid qui peuvent comprendre du tréfilage et/ou de l'étirage et/ou du forgeage et/ou du laminage et/ou du martelage. De même, à titre d'exemple, des déformations à chaud peuvent également être envisagées et peuvent comprendre de l'étirage et/ou du forgeage et/ou du laminage et/ou du martelage.

Préférentiellement, le procédé 1 peut comporter également, à la suite de l'étape 15, une étape supplémentaire 17 destinée à donner la forme finale de la section du ressort. Ainsi, dans l'étape 17, la section du corps est modifiée en une section polygonale, comme, par exemple, une section rectangulaire. Cette étape 17 est préférentiellement effectuée par laminage afin d'obtenir des tolérances dimensionnelles très avantageuses.

Le procédé 1 est poursuivi avec l'étape 21 dans laquelle on enroule le corps afin de former le ressort, par exemple, sensiblement en forme de spirale. Selon l'invention, l'étape 21 peut terminer le procédé 1. Cependant, d'autres variantes sont possibles.

Ainsi, une troisième étape optionnelle 23 peut être prévue après l'étape 21 afin de lever la spire externe du ressort formé lors de l'étape 21. Une telle étape 23 permet ainsi de former un ressort en spirale du type Breguet. Selon l'invention, l'étape optionnelle 23 peut également terminer le procédé 1.

Cependant, après l'étape 21 ou 23, le procédé 1 peut également se poursuivre avec l'étape 31 et/ou 33. Ainsi, comme illustré à la figure 1 en trait double, après l'étape 21 ou 23, le procédé 1 peut comporter l'étape 33 destinée à effectuer un traitement thermique dans le but d'ajuster le coefficient thermoélastique et la forme du ressort. Selon l'invention, l'étape 33 peut également terminer le procédé 1.

Néanmoins, l'étape 33 peut être remplacée ou précédée par l'étape 31 comme illustré par un trait simple à la figure 1. L'étape 31 est destinée à effectuer un enlèvement de matière au niveau du corps après la formation du ressort c'est-à-dire après l'étape 21 ou 23 afin d'ajuster le coefficient thermoélastique du ressort. L'étape 31 peut par exemple comporter une phase d'usinage et/ou d'attaque chimique. Selon l'invention, on comprend que l'étape 31 peut également terminer le procédé 1 et/ou être utilisée pour déterminer la surépaisseur à enlever sur la prochaine production.

Bien entendu, la présente invention ne se limite pas à l'exemple illustré mais est susceptible de diverses variantes et modifications qui apparaîtront à l'homme de l'art. Ainsi, notamment d'autres étapes de déformation à chaud et/ou à froid peuvent être envisagées.

## Revendications

1. Ressort thermocompensé pour balancier - spiral comportant une section comprenant un premier matériau métallique **caractérisé en ce qu'**au moins une des faces de la section comporte une couche externe comportant un deuxième matériau métallique amagnétique dont le coefficient thermoélastique varie dans le sens opposé à celui du premier.

2. Ressort selon la revendication 1, **caractérisé en ce qu'**au moins deux faces parallèles de la section comporte ladite couche externe.

3. Ressort selon la revendication 1, **caractérisé en ce qu'**au moins deux faces adjacentes de la section comporte ladite couche externe.

4. Ressort selon la revendication 1, **caractérisé en ce que** ladite couche externe recouvre chacune des faces de la section.

5. Ressort selon l'une des revendications précédentes, **caractérisé en ce que** ladite couche externe court sur toute la longueur du ressort.

6. Ressort selon l'une des revendications 1 à 4, **caractérisé en ce que** ladite couche externe court sur une partie de la longueur du ressort.

7. Ressort selon l'une des revendications précédentes, **caractérisé en ce que** le deuxième matériau est un acier inoxydable.

8. Ressort selon l'une des revendications 1 à 7, **caractérisé en ce que** le premier matériau est un alliage FeMn.

9. Ressort selon l'une des revendications 1 à 7, **caractérisé en ce que** le premier matériau est un alliage FeNi36 du type invar.

10. Ressort selon l'une des revendications précédentes, **caractérisé en ce qu'**au moins un des matériaux métalliques est paramagnétique.

11. Ressort selon l'une des revendications précédentes, **caractérisé en ce que** la section comporte plusieurs couches externes différentes.

12. Pièce d'horlogerie **caractérisée en ce qu'**elle comporte au moins un ressort conforme à l'une des revendications précédentes.

13. Procédé de fabrication (1) d'un ressort pour balancier-spiral comportant les étapes suivantes :

    a) former (11) un corps à l'aide d'un premier et d'un deuxième matériaux métalliques solidarisés, les premier et deuxième matériaux ayant des coefficients thermoélastiques qui varient en sens opposé ;
    b) diminuer (15) la section du corps ;
    c) enrouler (21) le corps afin de former ledit ressort.

14. Procédé (1) selon la revendication précédente, **caractérisé en ce qu'**il comporte, entre l'étape b) et c), l'étape suivante :

    d) modifier (17) la section dudit corps en une section polygonale.

15. Procédé (1) selon la revendication 13 ou 14, **caractérisé en ce qu'**il comporte, après l'étape c), l'étape suivante :

e) surélever (23) la spire externe dudit ressort afin de former un ressort du type Breguet.

16. Procédé (1) selon l'une des revendications 13 à 15, **caractérisé en ce que** l'étape a) comporte les phases suivantes :

    h) former (3) une barre en un premier matériau métallique ;
    i) former (5) un tube en un deuxième matériau métallique ;
    j) enfiler (7) la barre dans le tube ;
    k) solidariser (13) la barre dans le tube.

17. Procédé (1) selon la revendication précédente, **caractérisé en ce qu'**il comporte, pendant l'étape j), une phase (9) de refroidissement de la barre et/ou de chauffage du tube afin d'augmenter les espaces entre ces derniers dans le but de faciliter ladite étape j).

18. Procédé (1) selon l'une des revendications 13 à 15, **caractérisé en ce que** l'étape a) comporte les phases suivantes :

    l) former (3) une pièce en un premier matériau métallique ;
    m) solidariser (5, 7, 13) un deuxième matériau métallique sur la pièce par surmoulage et/ou placage.

19. Procédé (1) selon l'une des revendications 13 à 15, **caractérisé en ce que** l'étape a) comporte les phases suivantes :

    n) former (3) une pièce en un premier matériau métallique ;
    o) solidariser (5, 7, 13) un deuxième matériau métallique sur la pièce par déformation à froid et/ou à chaud.

20. Procédé (1) selon l'une des revendications 13 à 15, **caractérisé en ce que** l'étape a) comporte les phases suivantes :

    p) former (3) une pièce en un premier matériau métallique ;
    q) solidariser (5, 7, 13) un deuxième matériau métallique sur la pièce par collage et/ou soudage.

21. Procédé (1) selon l'une des revendications 13 à 20, **caractérisé en ce que** l'étape b) est réalisée par un processus (11) de déformation à froid et/ou à chaud.

22. Procédé (1) selon l'une des revendications 13 à 21, **caractérisé en ce que** la section externe du corps à la fin de l'étape a) est comprise entre 5 et 100 mm.

23. Procédé (1) selon l'une des revendications 13 à 22, **caractérisé en ce que** la section externe du corps à la fin de l'étape c) est comprise entre 10 $\mu$m et 1 mm.

24. Procédé de fabrication (1) d'un ressort pour balancier-spiral comportant les étapes suivantes :

    a') former (11, 15, 21) un corps en forme de ressort à l'aide d'un premier matériau métallique ;
    b') solidariser (5, 7, 13) un deuxième matériau métallique sur le corps par surmoulage et/ou placage, les premier et deuxième matériaux ayant des coefficients thermoélastiques qui varient en sens opposé.

25. Procédé (1) selon la revendication précédente, **caractérisé en ce que** l'étape a') est réalisée par un processus du type tréfilage - laminage - estrapadage - traitement thermique de fixage.

26. Procédé (1) selon la revendication 24, **caractérisé en ce que** l'étape a') est réalisée par gravage du type ionique réactif profond dans une plaque dudit premier matériau métallique.

27. Procédé (1) selon la revendication 24, **caractérisé en ce que** l'étape a') est réalisée par un processus d'électroformage du type LIGA.

28. Procédé (1) selon l'une des revendications 24 à 27, **caractérisé en ce que** l'étape b') est réalisée par coulée, par galvanoplastie ou par dépôt physique ou chimique en phase vapeur.

29. Procédé (1) selon l'une des revendications 13 à 28, **caractérisé en ce qu'**il comporte l'étape suivante :

    f) effectuer (31) un enlèvement de matière du corps après la formation (21, 23) du ressort afin d'en ajuster le coefficient thermoélastique.

30. Procédé (1) selon l'une des revendications 13 à 29, **caractérisé en ce qu'**il comporte l'étape finale suivante :

g) effectuer (33) un traitement thermique après la formation (21, 23) du ressort afin d'ajuster le coefficient thermoélastique et la forme du ressort.

31. Procédé (1) selon l'une des revendications 13 à 30, **caractérisé en ce qu'**au moins un des matériaux est paramagnétique.

**Patentansprüche**

1. Thermokompensierte Feder für Unruh-Spiralfeder, die einen Abschnitt aufweist, der ein erstes metallisches Material enthält, **dadurch gekennzeichnet, dass** wenigstens eine der Flächen des Abschnitts eine äußere Schicht aufweist, die ein zweites nicht magnetisches metallisches Material enthält, dessen Thermoelastizitätskoeffizient sich in einer Richtung ändert, die zu jener des ersten Materials entgegengesetzt ist.

2. Feder nach Anspruch 1, **dadurch gekennzeichnet, dass** wenigstens zwei parallele Flächen des Abschnitts die äußere Schicht aufweisen.

3. Feder nach Anspruch 1, **dadurch gekennzeichnet, dass** wenigstens zwei benachbarte Flächen des Abschnitts die äußere Schicht aufweisen.

4. Feder nach Anspruch 1, **dadurch gekennzeichnet, dass** die äußere Schicht jede der Flächen des Abschnitts abdeckt.

5. Feder nach einem der vorhergehenden Ansprüche, **dadurch gekennzeichnet, dass** die äußere Schicht über die gesamte Länge der Feder verläuft.

6. Feder nach einem der Ansprüche 1 bis 4, **dadurch gekennzeichnet, dass** die äußere Schicht über einen Teil der Länge der Feder verläuft.

7. Feder nach einem der vorhergehenden Ansprüche, **dadurch gekennzeichnet, dass** das zweite Material ein Edelstahl ist.

8. Feder nach einem der Ansprüche 1 bis 7, **dadurch gekennzeichnet, dass** das erste Material eine FeMn-Legierung ist.

9. Feder nach einem der Ansprüche 1 bis 7, **dadurch gekennzeichnet, dass** das erste Material eine FeNi36-Legierung des Invar-Typs ist.

10. Feder nach einem der vorhergehenden Ansprüche, **dadurch gekennzeichnet, dass** wenigstens eines der metallischen Materialien paramagnetisch ist.

11. Feder nach einem der vorhergehenden Ansprüche, **dadurch gekennzeichnet, dass** der Abschnitt mehrere verschiedene äußere Schichten aufweist.

12. Zeitmessgerät, **dadurch gekennzeichnet, dass** es wenigstens eine Feder nach einem der vorhergehenden Ansprüche umfasst.

13. Verfahren (1) zur Herstellung einer Feder für eine Unruh-Spiralfeder, das die folgenden Schritte umfasst:

a) Ausbilden (11) eines Körpers mit Hilfe eines ersten und eines zweiten aneinander befestigten metallischen Materials, wobei das erste und das zweite Material thermoelastische Koeffizienten besitzen, die sich in entgegengesetzter Richtung ändern;
b) Verringern (15) des Querschnitts des Körpers;
c) Wickeln (21) des Körpers, um die Feder auszubilden.

**14.** Verfahren (1) nach dem vorhergehenden Anspruch, **dadurch gekennzeichnet, dass** es zwischen dem Schritt b) und dem Schritt c) den folgenden Schritt umfasst:

> d) Modifizieren (17) des Querschnitts des Körpers in einen polygonalen Querschnitt.

**15.** Verfahren (1) nach Anspruch 13 oder 14, **dadurch gekennzeichnet, dass** es nach dem Schritt c) den folgenden Schritt umfasst:

> e) Erhöhen (23) der äußeren Windung der Feder, um eine Feder des Breguet-Typs auszubilden.

**16.** Verfahren (1) nach einem der Ansprüche 13 bis 15, **dadurch gekennzeichnet, dass** der Schritt a) die folgenden Phasen umfasst:

> h) Ausbilden (3) eines Stabs aus einem ersten metallischen Material;
> i) Ausbilden (5) eines Rohrs aus einem zweiten metallischen Material;
> j) Einführen (7) des Stabs in das Rohr;
> k) Befestigen (13) des Stabs in dem Rohr.

**17.** Verfahren (1) nach dem vorhergehenden Anspruch, **dadurch gekennzeichnet, dass** es während des Schrittes j) eine Phase (9) des Kühlens des Stabs und/oder des Erwärmens des Rohrs umfasst, um die Zwischenräume zwischen diesen Letzteren zu vergrößern, um den Schritt j) zu erleichtern.

**18.** Verfahren (1) nach einem der Ansprüche 13 bis 15, **dadurch gekennzeichnet, dass** der Schritt a) die folgenden Phasen umfasst:

> l) Ausbilden (3) eines Teils aus einem ersten metallischen Material;
> m) Befestigen (5, 7, 13) eines zweiten metallischen Materials an dem Teil durch Überformen und/oder Plattieren.

**19.** Verfahren (1) nach einem der Ansprüche 13 bis 15, **dadurch gekennzeichnet, dass** der Schritt a) die folgenden Phasen umfasst:

> n) Ausbilden (3) eines Teils aus einem ersten metallischen Material;
> o) Befestigen (5, 7, 13) eines zweiten metallischen Materials an dem Teil durch Kalt- und/oder Heißverformen.

**20.** Verfahren (1) nach einem der Ansprüche 13 bis 15, **dadurch gekennzeichnet, dass** der Schritt a) die folgenden Phasen umfasst:

> p) Ausbilden (3) eines Teils aus einem ersten metallischen Material;
> q) Befestigen (5, 7, 13) eines zweiten metallischen Materials an dem Teil durch Kleben und/oder Schweißen.

**21.** Verfahren (1) nach einem der Ansprüche 13 bis 20, **dadurch gekennzeichnet, dass** der Schritt b) durch einen Prozess (11) mit Kalt- und/oder Heißverformung ausgeführt wird.

**22.** Verfahren (1) nach einem der Ansprüche 13 bis 21, **dadurch gekennzeichnet, dass** der äußere Querschnitt des Körpers am Ende des Schrittes a) zwischen 5 und 100 mm liegt.

**23.** Verfahren (1) nach einem der Ansprüche 13 bis 22, **dadurch gekennzeichnet, dass** der äußere Querschnitt des Körpers am Ende des Schrittes c) zwischen 10 $\mu$m und 1 mm liegt.

**24.** Verfahren (1) zur Herstellung einer Feder für eine Unruh-Spiralfeder, das die folgenden Schritte umfasst:

> a') Ausbilden (11, 15, 21) eines Körpers in Form einer Feder mit Hilfe eines ersten metallischen Materials;
> b') Befestigen (5, 7, 13) eines zweiten metallischen Materials an dem Körper durch Überformen und/oder Plattieren, wobei das erste und das zweite Material thermoelastische Koeffizienten haben, die sich in entgegengesetzter Richtung ändern.

**25.** Verfahren (1) nach dem vorhergehenden Anspruch, **dadurch gekennzeichnet, dass** der Schritt a') durch einen Prozess des Typs Drahtziehen - Laminieren - Federwinden - Befestigungswärmebehandeln ausgeführt wird.

26. Verfahren (1) nach Anspruch 24, **dadurch gekennzeichnet, dass** der Schritt a') durch tiefes reaktives Ionenätzen in einer Platte aus dem ersten metallischen Material ausgeführt wird.

27. Verfahren (1) nach Anspruch 24, **dadurch gekennzeichnet, dass** der Schritt a') durch einen Elektroformungsprozess des LIGA-Typs ausgeführt wird.

28. Verfahren (1) nach einem der Ansprüche 24 bis 27, **dadurch gekennzeichnet, dass** der Schritt b') durch Gießen, Galvanoplastik oder physikalische oder chemische Abscheidung aus der Dampfphase ausgeführt wird.

29. Verfahren (1) nach einem der Ansprüche 13 bis 28, **dadurch gekennzeichnet, dass** es den folgenden Schritt umfasst:

   f) Ausführen (31) des Entfernens von Material des Körpers nach der Ausbildung (21, 23) der Feder, um den thermoelastischen Koeffizienten einzustellen.

30. Verfahren (1) nach einem der Ansprüche 13 bis 29, **dadurch gekennzeichnet, dass** es den folgenden letzten Schritt umfasst:

   g) Ausführen (33) einer Wärmebehandlung nach der Ausbildung (21, 23) der Feder, um den thermoelastischen Koeffizienten und die Form der Feder einzustellen.

31. Verfahren (1) nach einem der Ansprüche 13 bis 30, **dadurch gekennzeichnet, dass** wenigstens eines der Materialen paramagnetisch ist.

**Claims**

1. Thermocompensated spring for a sprung balance including a section with a first metallic material, **characterized in that** at least one of the surfaces of the section has an external layer including a second nonmagnetic metallic material, whose thermoelastic coefficient varies in the opposite direction to that of the first metallic material.

2. Spring according to claim 1, **characterized in that** at least two parallel surfaces of the section include said external layer.

3. Spring according to claim 1, **characterized in that** at least two adjacent surfaces of the section include said external layer.

4. Spring according to claim 1, **characterized in that** said external layer covers each of the surfaces of the section.

5. Spring according to any claims 1 to 4, **characterized in that** said external layer runs over the entire length of the spring.

6. Spring according to any of claims 1 to 4, **characterized in that** said external layer runs over one part of the length of the spring.

7. Spring according to any of claims 1 to 6, **characterized in that** the second material is a stainless steel.

8. Spring according to any of claims 1 to 7, **characterized in that** the first material is a FeMn alloy.

9. Spring according to any of claims 1 to 7, **characterized in that** the first material is an invar type FeNi36 alloy.

10. Spring according to any of claims 1 to 9, **characterized in that** at least one of the metallic materials is paramagnetic.

11. Spring according to any of claims 1 to 10, **characterized in that** the section has several different external layers.

12. Timepiece, **characterized in that** it includes at least one spring according to any of claims 1 to 11.

13. Method (1) of manufacturing a spring for a sprung balance including the following steps:

a) forming (11) a body using first and second metallic materials secured to each other, with the first and second materials having thermoelastic coefficients that vary in opposite directions;
b) decreasing (15) the section of the body;
c) winding (21) the body to form said spring.

**14.** Method (1) according to claim 13, **characterized in that** between step b) and c), it includes the following step:

d) changing (17) the section of said body into a polygonal section.

**15.** Method (1) according to claim 13 or 14, **characterized in that** after step c), it includes the following step:

e) raising (23) the outer coil of said spring to form a Breguet overcoil spring.

**16.** Method (1) according to any of claims 13 to 15, **characterized in that** step a) includes the following phases:

h) forming (3) a bar in a first metallic material;
i) forming (5) a tube in a second metallic material;
j) fitting (7) the bar inside the tube;
k) securing (13) the bar to the tube.

**17.** Method (1) according to claim 16, **characterized in that** it includes, during step j), a phase (9) of cooling the bar and/or heating the tube to increase the spaces between said bar and tube in order to facilitate step j).

**18.** Method (1) according to any of claims 13 to 15, **characterized in that** step a) includes the following phases:

l) forming (3) a part in a first metallic material;
m) securing (5, 7, 13) a second metallic material onto the part by overmoulding and/or plating.

**19.** Method (1) according to any of claims 13 to 15, **characterized in that** step a) includes the following phases:

n) forming (3) a part in a first metallic material;
o) securing (5, 7, 13) a second metallic material onto the part by cold and/or hot deformation.

**20.** Method (1) according to any of claims 13 to 15, **characterized in that** step a) includes the following phases:

p) forming (3) a part in a first metallic material;
q) securing (5, 7, 13) a second metallic part onto the part by bonding and/or welding.

**21.** Method (1) according to any of claims 13 to 20, **characterized in that** step b) is achieved by a cold and/or hot deformation process (11).

**22.** Method (1) according to any of claims 13 to 21, **characterized in that** the external section of the body at the end of step a) is comprised between 5 and 100 mm.

**23.** Method (1) according to any of claims 13 to 22, **characterized in that** the external section of the body at the end of step c) is comprised between 10 $\mu$m and 1 mm.

**24.** Method (1) of manufacturing a spring for a sprung balance that includes the following steps:

a') forming (11, 15, 21) a spring-shaped body using a first metallic material;
b') securing (5, 7, 13) a second metallic material to the body by overmoulding and/or plating, with the first and second metallic materials having thermoelastic coefficients that vary in opposite directions.

**25.** Method (1) according to claim 24, **characterized in that** step a') is achieved by a wire drawing - laminating - winding - heat setting treatment.

**26.** Method (1) according to claim 24, **characterized in that** step a') is achieved by deep reactive ion etching in a plate of said first metallic material.

27. Method (1) according to claim 24, **characterized in that** step a') is achieved by a LIGA type electroforming process.

28. Method (1) according to any of claims 24 to 27, **characterized in that** step b') is achieved by casting, galvanoplasty or physical or chemical vapour deposition.

29. Method (1) according to any of claims 13 to 28, **characterized in that** it includes the following step:

   f) removing (31) matter from the body after the spring has been formed (21, 23) so as to adjust the thermoelastic coefficient thereof.

30. Method (1) according to any of claims 13 to 29, **characterized in that** it includes the following final step:

   g) performing (33) a heat treatment after the spring has been formed (21, 23) so as to adjust the thermoelastic coefficient and shape of the spring.

31. Method (1) according to any of claims 13 to 30, **characterized in that** at least one of the materials is paramagnetic.

Fig. 1

**EP 2 264 553 B1**

## RÉFÉRENCES CITÉES DANS LA DESCRIPTION

**Documents brevets cités dans la description**

- EP 1039352 A
- US 1977458 A
- WO 200906891 A